# EUROPÄISCHE PATENTSCHRIFT

(11) **EP 0 556 454 B1**
(45) Veröffentlichungstag und Bekanntmachung des Hinweises auf die Patenterteilung: **24.01.1996**
(21) Anmeldenummer: 92119659.8
(22) Anmeldetag: 19.11.1992
(51) Int. Cl.: B27K 3/52

(54) **Chromfreies Holzschutzmittel**
Wood protective agent without chromium
Agent préservatif du bois sans chrome

(30) Priorität: 19.02.1992 DE 4204940
(43) Veröffentlichungstag der Anmeldung: 25.08.1993
(73) Patentinhaber: RÜTGERSWERKE AKTIENGESELLSCHAFT, D-60050 Frankfurt (DE)
(72) Erfinder: Barth, Volker, Dr., W-6700 Ludwigshafen 29 (DE); Härtner, Helmut, Dr., W-6940 Weinheim (DE)

(56) Entgegenhaltungen:
- EP-A- 0 355 316
- EP-A- 0 370 182
- EP-A- 0 439 266
- DE-A- 3 520 394

## Beschreibung

Gegenstand der Erfindung sind salzartige, wasserlösliche Holzschutzmittel, die als Wirkstoff Kupfersalz enthalten. Derartigen Holzschutzmitteln, die insbesondere zum Imprägnieren von Holz verwendet werden, das der Witterung ausgesetzt ist, oder das mit Erdkontakt verbaut wird, werden zur Fixierung im Holz Chromate zugegeben.

Aus toxikologischen Gründen und Umweltaspekten wird versucht, entsprechende chromatfreie Holzschutzmittel zu entwickeln.

Aus DE-C-34 47 027 sind Holzschutzmittel bekannt, die Kupfer- und Borverbindungen enthalten, wobei je g-Atom Kupfer 0,5 bis 2,5 g-Atom Bor und 2 bis 10 Mol eines Alkanolamins enthalten sind.

Gemäß DE-A- 35 20 394 wird eine Kupfersalzlösung mit einem Alkanolamin und gegebenenfalls Alkali auf einen pH-Wert von mindestens 8 eingestellt.

Ein derartiges Mittel kann zusätzlich ein Borsalz und andere wasserlösliche Fungizide, insbesondere quaternäre Ammoniumsalze (bis zu 25 Gew.-% des fertigen Mittels), enthalten. Durch allmähliches Abdampfen der Alkanolamins aus mit derartigen, toxikologisch unbedenklichen Mitteln imprägniertem Holz, bzw. durch Neutralisation durch Holzinhaltsstoffe werden die Kupfersalze fixiert. Aber die Wirkung dieser Mittel, insbesondere die Langzeitwirkung, ist trotz der zusätzlichen Verwendung von quaternärem Ammoniumsalz nicht ausreichend, um die vom Verbraucher gewünschte Schutzwirkung zu erzielen.

Auch die an sich naheliegende Zugabe weiterer fungizider Mittel erbringt keine wesentliche Verbesserung. Insbesondere verbleibt das Problem mit den ubiquitär vorhandenen Kupfer-resistenten Pilzen der Gattung Porea. Diese Pilze bewirken insbesondere im mit dem Kupfer-Alkanolamin-System imprägnierten Holz, daß das Kupfer wieder in eine lösliche Form gebracht und ausgewaschen wird.

Es ist demnach Aufgabe der Erfindung, ein salzartiges, wasserlösliches Mittel bereitzustellen, das zum Schutz von durch Pilzeinwirkung stark gefährdetem Holz geeignet ist, das chromfrei ist, das toxikologisch ebenso unbedenklich ist, wie die bekannten Mittel auf Kupfer-Alkanolamin-Basis, das aber eine wesentlich verbesserte Wirkung, insbesondere Langzeitwirkung zeigt, die nicht durch die Kupfer-resistenten Pilze beeinträchtigt wird.

Die Lösung der Aufgabe erfolgt durch Holzschutzmittel gemäß der Ansprüche 1 bis 5. Es wurde gefunden, daß durch Zugabe von polymerem, quartärem Ammoniumborat zu Kupfersalz und Alkanolamin enthaltenden Holzschutzmitteln die Einbringmengen der resultierenden Mittel drastisch gesenkt werden können. So sinken z.B. die Grenzwerte gegenüber holzzerstörenden Basidiomyceten durch Zusatz von 6,5 Gew.-% polymerem, quartärem Ammoniumborat zu einem Mittel auf Kupfer-Alkanolamin-Basis um den Faktor 10.

Auch in Kenntnis der Tatsache, daß aus EP-A 0 355 316 bekannt ist, daß sich polymere, quartäre Ammoniumborate als Mittel zum Konservieren von Holz eignen, ist dieses Ergebnis als überraschender synergetischer Effekt der eingesetzten Wirkstoffe zu sehen. Insbesondere unerwartet ist, daß diese erfindungsgemäße Wirkstoffkombination auch gegen die Kupfer-resistenten Pilze wirksam ist, gleichzeitig die insektizide Wirkung der Formulierungen, die nur polymere quartäre Ammoniumborate enthalten, weiter erhöht und daß sie einen Abbau der fixierten Kupfer-Salze verhindert und somit einen Langzeitschutz des Holzes ermöglicht. Außerdem war die beanspruchte Wirkstoffkombination nicht naheliegend, da dem Fachmann einerseits die Zugabe von Alkanolamin überflüssig erscheinen mußte, weil die polymeren, quartären Ammoniumborate als technische Produkte zur Herstellung der Imprägnierungslösungen verwendet werden, und aus dem Herstellungsprozess selbst noch Amine in der Lösung vorliegen können, wie sich an Beispiel 1 zeigt. Andererseits können in diesen Rohlösungen durch Hydrolyse des Ethylen- oder Propylenoxids entstandene Glykole vorliegen, die ebenso wie Amine komplexbildend wirken, so daß durch die zusätzliche Zugabe von Alkanolamin keine Steigerung der Wirksamkeit erwartet werden konnte. Darüber hinaus zeigten sich sogar in anderen Imprägnierlösungen, in denen Alkanolamin und polymeres, quartäres Ammoniumborat gemeinsam eingesetzt wurden, unerwünschte Wirkungen, wie z.B. die Ausbildung von Rückständen auf der Oberfläche der Imprägnierlösung und Trenneffekte im Holz. Daher war es völlig unerwartet, daß einerseits eine so gravierende Verbesserung der Impägnierleistung durch die beanspruchte Wirkstoffkombination erzielt werden konnte, und andererseits sich das Wirkspektrum so entscheidend verbreitern würde.

Die erfindungsgemäßen Mittel enthalten
5 bis 50 Gew.-% Kupfersalz
5 bis 50 Gew.-% Alkanolamin
2 bis 50 Gew.-% polymeres, quartäres Ammoniumborat und gegebenenfalls bis zu
5 Gew.-% Alkali und bis zu
50 Gew.-% weitere anorganische fungizide und/oder insektizide Wirkstoffe oder Wirkstoffgemische, insbesondere Borsäure oder ein oder mehrere wasserlösliche Borsalze, sowie evtl. geringe Mengen Hilfsmittel und Wasser, wobei die Summe jeweils 100 Gew.-% ergibt.

Diese Mittel werden bevorzugt als Konzentrate hergestellt, die vor Gebrauch mit Wasser auf eine Konzentration von 1 bis 20 % (der Summe aller o. g. Wirkstoffe) verdünnt werden.

Diese verdünnten, wäßrigen Mittel können mit allen üblichen Verfahren, wie z. B. Streichen, Sprühen, Tauchen oder Druckimprägnieren zur Behandlung von Holz verwendet werden.

Als Kupfersalz können alle handelsüblichen Kupfersalze eingesetzt werden, wie z. B. Kupfersulfat, -fluoroborat, -hydroxid, -borat, -fluorid, -carbonat, -oxychlorid, -formiat oder -acetat.

Bevorzugtes Kupfersalz ist basisches Kupfercarbonat entsprechend der vereinfachten Formel Cu(OH)₂ · CuCO₃.

Beispiele für Alkanolamine sind Isopropanolamin, 1,2-Diaminoethanol, Diethanolamin, Dimethylethanolamin und Triethanolamin. Bevorzugtes Alkanolamin ist Ethanolamin.

Die Menge der zugesetzten Alkanolamine ist bevorzugt so bemessen, daß sie einerseits zur Komplexbildung des Kupfers ausreicht (1 g-Atom Kupfer benötigt i. a. 4 Mol-Äquivalente Amin) und sich andererseits gegebenenfalls Alkanolamin-Salze evtl. zusätzlich verwendeter fungizider Anionen (Fluorid, Borat, Fluoroborat und Flurophosphat) oder Säureester bilden können.

Die polymeren quartären Ammoniumborate sind Substanzen, die erhalten werden, durch gleichzeitige Umsetzung von Aminen der allgemeinen Formeln I oder II 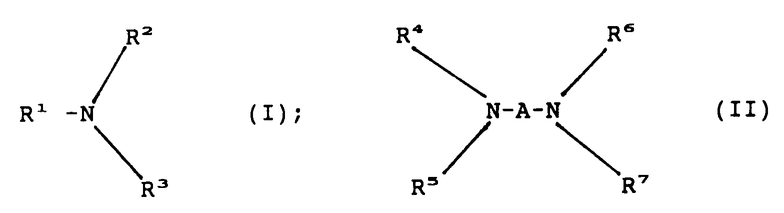
mit 2 bis 20, vorzugsweise 3 bis 10, Mol Ethylen- oder Propylenoxid und 0,6 bis 1,5, vorzugsweise 1 Mol Borsäure, Borsäureester oder Salzen der Borsäure, jeweils pro Mol Stickstoffäquivalent, wobei R¹ C₈-C₂₂-Alkyl oder C₈-C₂₂-Alkenyl bedeutet oder, wenn R² und R³ Gruppen der Formel -(C₂H₄O)ₓH oder -(C₃H₆O)ₓH darstellen, R¹ auch C₁-C₄-Alkyl bedeuten kann, R² Wasserstoff, C₁-C₂₂-Alkyl oder eine Gruppe der Formeln -(C₂H₄O)ₓH, -(C₃H₆O)ₓH oder -CH₂CH₂CH₂NH₂ bedeutet, R⁴ und R⁶ C₁-C₄-Alkyl oder eine Gruppe der Formeln -(C₂H₄O)ₓH oder -(C₃H₆O)ₓH bedeuten, R⁵ und R⁷ eine Gruppe der Formel -(C₂H₄O)ₓH, oder -(C₃H₆O)ₓH, A eine Gruppe der Formeln -(CH₂)ₙ-, -(CH₂CH₂OCH₂OH)ₙ- oder -(CH₂CH₂NHCH₂CH₂)ₙ, x Zahlen von 1 bis 55 und n eine ganze Zahl von 1 bis 20 bedeuten.

Als Amine der obigen Formeln sind folgende bevorzugt:
1. Amine der Formel I, wobei R¹ C₈-C₂₂-Alkyl, R² C₈-C₂₂-Alkyl oder C₁-C₄-Alkyl und R³ Wasserstoff oder eine Gruppe der Formeln -(C₂H₄O)ₓH, oder -(C₃H₆O)ₓH bedeuten.
2. Amine der Formel I, wobei R¹ C₈-C₂₂-Alkyl und R² und R³ Wasserstoff bedeuten.
3. Amine der Formel I, wobei R¹ C₁-C₄-Alkyl oder C₈-C₂₂-Alkyl und R² und R³ Gruppen der Formeln -(C₂H₄O)ₓH oder -(C₃H₆O)ₓH bedeuten, wobei die Summe der Ethylenoxid-Gruppen in beiden Resten R² und R³ 2 bis 20 beträgt.
4. Amine der Formel I, wobei R¹ C₈-C₂₂-Alkyl, R² Wasserstoff oder eine Gruppe der Formel -CH₂CH₂CH₂NH₂ und R³ eine Gruppe der Formel -CH₂CH₂CH₂NH₂ bedeuten.
5. Amine der Formel II, wobei A, R⁴, R⁵, R⁶ und R⁷ die oben genannten Bedeutungen haben und wobei die Summe aller Ethylenoxid-Gruppen 4 bis 30 beträgt.

Bei den Alkylenoxid-Gruppen der Formeln -(C₂H₄O)ₓH und -(C₃H₆O)ₓH ist die Gruppe der Formel -(C₂H₄O)ₓH bevorzugt. Anstelle der reinen Polyoxethylen- und Polyoxpropylen-Gruppen können auch solche Reste vorhanden sein, die sowohl aus Ethylenoxid- als auch aus Propylenoxid-Einheiten aufgebaut sind.

Die Umsetzung der Amine mit der Borsäure und dem Alkylenoxid erfolgt in der Weise, daß in einem Autoklaven das jeweilige Amin und die Borsäure vorgelegt und das Alkylenoxid zudosiert wird. Die Reaktionstemperatur beträgt im allgemeinen 60 bis 130 °C, vorzugsweise 60 bis 125 °C, insbesondere 60 bis 100 °C. Der Reaktionsdruck beträgt 50 bis 600 kPa. Die Zudosierung des Alkylenoxides unter diesen Reaktionsbedingungen erfolgt über einen Zeitraum von 1 bis 5 Stunden. Zur Nachreaktion wird das Gemisch bei dem angegebenen Druck 3 bis 12 Stunden auf einer Temperatur von 70 bis 120 °C, vorzugsweise 70 bis 100 °C gehalten.

Anstelle der Borsäure können auch deren Ester, wie z. B. Trimethylborsäureester oder deren Salze, beispielsweise Na-Borat eingesetzt werden. Bei der Reaktion entstehen als Nebenprodukte Wasser und Polyglykole.

Die erhaltenen polymeren, quartären Ammoniumverbindungen enthalten im wesentlichen als Strukturmerkmal Gruppen der Formel 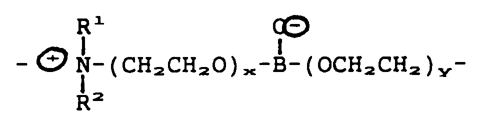
bzw. Gruppen der Formel

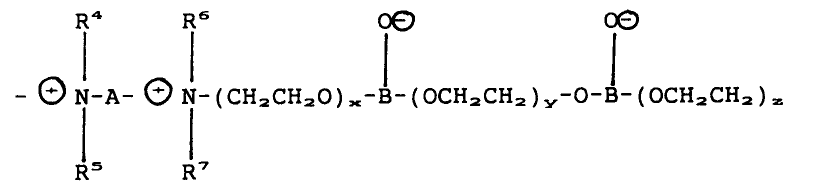

wenn die Reaktion mit Ethylenoxid gemacht wurde. Sie sind als polymere Betaine anzusehen.

### BEISPIELE

### Beispiel 1

In einem 1 l Glasautoklaven legt man 194,4 g (0,80 Mol) einer Mischung aus 9,6 % (n/n) Octylamin, 89 % (n/n) Dioctylamin und 1,4 % (n/n) Trioctylamin (Aminzahl: 230,9) und 49,4 g (0,80 Mol) wasserfreie Borsäure vor und erwärmt unter Rühren auf 80 °C. Zu der dann flüssigen Reaktionsmischung dosiert man bei einer Innentemperatur von 80 bis 100 °C innerhalb von 2,5 Stunden 158 ml (3,20 Mol) flüssiges Ethylenoxid so zu, daß der Innendruck einen Wert von 460 kPa nicht übersteigt und läßt nach beendeter Zugabe noch 6 Stunden nachreagieren. Nach dieser Zeit ist der Druck auf 40 kPa abgefallen.

Das bei 25 °C flüssige und homogene Reaktionsprodukt wird durch folgende analytische Werte charakterisiert:
Viskosität (Haake RV 12, 25 °C, 25 °C, D= 21 s⁻¹): 39 Pa·s, Wasser (K. Fischer): 10 % (m/m), Ethylenglykol: 7,4 % (m/m), Diethylenglykol: 3,3 % (m/m), Triethylenglykol: 1,7 % (m/m), pH-Wert: 9,8.

Aus einer Ethylenoxid-Bilanz errechnet sich ein statistischer Wert von 3 Mol gebundenen Ethylenoxid pro Stickstoffäquivalent. Das Produkt wird mit Wasser auf einen Wirkstoffgehalt von 65 % eingestellt.

### Beispiel 2:

Es werden Holzschutzmittelkonzentrate der folgenden Zusammensetzung hergestellt (Angabe in Gewichtsteilen):

| Mittel | | A | B | C | D | E |
|---|---|---|---|---|---|---|
| Wirkstoffe | Ethanolamin | 38,55 | 38,55 | 38,55 | - | - |
| | basisches Kupfercarbonat | 20,53 | 20,53 | 20,53 | - | |
| | Kupfersulfat | | | | | 20,53 |
| | Borsäure | 8,00 | 8,00 | 8,00 | - | 8,00 |
| | N-Alkybenzyldimethyl -ammoniumchlorid | - | - | 10,00 | - | - |
| | Polymeres quartäres Ammoniumborat (gemäß Beispiel 1) | 10,00 | - | - | 100 | 10,00 |
| | Wasser | 22,92 | 32,92 | 22,92 | - | 62,47 |

Die Konzentrate werden mit Wasser jeweils auf eine Konzentration der Wirkstoffe von 3 % eingestellt.

Mit diesen Mitteln werden trockene Kiefernholzproben imprägniert. Die Grenzwerte gegenüber holzzerstörenden Basidomyceten werden nach Auswaschung (gemäß DIN EN 113 u. DIN EN 84) bestimmt.

Ergebnisse/Grenzwerte (Einbringmenge des Konzentrates [kg/m³]):

| Mittel | A | B | C | D | E |
|---|---|---|---|---|---|
| | 4,5 | 45,0 | 39,0 | 9,5 | > 30,0 |

Nach einer 12-monatigen Lagerung in feuchter Erde ist in den Proben B, C und E nahezu kein fungizid wirksames Kupfer mehr vorhanden, während die Probe A noch nahezu unverändert ist.

### Beispiel 3:

Probekörper aus Kiefernsplintholz werden gemäß EN 117 mit Lösungen der Zusammensetzung A aus Beispiel 2, die durch Zugabe von Wasser auf Wirkstoffkonzentrationen von 5, 3,5 und 2 Massen-% eingestellt wurden, getränkt und getrocknet. Die Probehölzer werden dann gemäß E 117 nach EN 84 auf ihre Wirksamkeit gegen die Termite Reticulitermes santonensis (je Ansatz 250 Arbeiter, 1 Soldat, 1 Nymphe)
getestet.

| Probehölzer | | Untersuchte Konzentration Massen-% | Lösungsaufnahme je Probeholz in g | Schutzmittelaufnahme | | Überlebende Tiere nach 8 Wochen | | Bewertung * |
|---|---|---|---|---|---|---|---|---|
| Art | Nr. | | | je Probeholz in kg/m³ | mittlere in kg/m³ | Arbeiter in % abrundet | Soldaten (S) Nymphen (N) | |
| unbehandelte Kontrollproben | 1 | 0 | 0 | 0 | 0 | 79 | S/N | 4 |
| | 2 | | 0 | 0 | | 73 | S/N | 4 |
| | 3 | | 0 | 0 | | 71 | S/N | 4 |
| mit Lösungs-oder Verdünnungsmittel beh. Kontrollproben | 4 | 0 | 13,5 | 0 | 0 | 76 | S/N | 4 |
| | 5 | | 13,5 | 0 | | 61 | S/N | 4 |
| | 6 | | 13,5 | 0 | | 77 | S/N | 4 |
| behandelt | 7 | 2 | 13,6 | 14,5 | 14,3 | 0 | 0 | 1 |
| | 8 | | 13,5 | 14,4 | | 0 | 0 | 1 |
| | 9 | | 13,3 | 14,1 | | 0 | 0 | 1 |
| | 10 | 3,5 | 12,4 | 23,1 | 23,2 | 0 | 0 | 1 |
| | 11 | | 12,6 | 23,5 | | 0 | 0 | 1 |
| | 12 | | 12,3 | 23,0 | | 0 | 0 | 1 |
| | 13 | 5 | 13,6 | 36,3 | 34,5 | 0 | 0 | 1 |
| | 14 | | 12,8 | 34,1 | | 0 | 0 | 1 |
| | 15 | | 12,4 | 33,0 | | 0 | 0 | 1 |

| | | | | | | | | |
|---|---|---|---|---|---|---|---|---|
| * Bewertungsstufen: 0 = kein Angriff 1 = Nagespuren 2 = leichter Angriff 3 = mittlerer Angriff 4 = starker Angriff | | | | | | | | |

Bei der Tränkung mit dem Schutzmittel zeigten bei einer Prüfkonzentration von
2 % (mittlere Aufnahmemenge 14,3 kg/m³)
3,5 % (mittlere Aufnahmemenge 23,2 kg/m³) und
5 % (mittlere Aufnahmemenge 34,5 kg/m³)
die behandelten Proben geringe Nagespuren, die Tiere überlebten jedoch nicht.

## Patentansprüche

1. Chromfreies Holzschutzmittel auf der Basis von Kupfersalzen und Alkanolamin, bestehend aus 5-50 Gew.-% Kupfersalz, 5-50 Gew.-% Alkanolamin, 2-50 Gew.-% quartäres Ammoniumborat, das erhalten wird durch gleichzeitige Umsetzung von Aminen der allgemeinen Formel I oder II 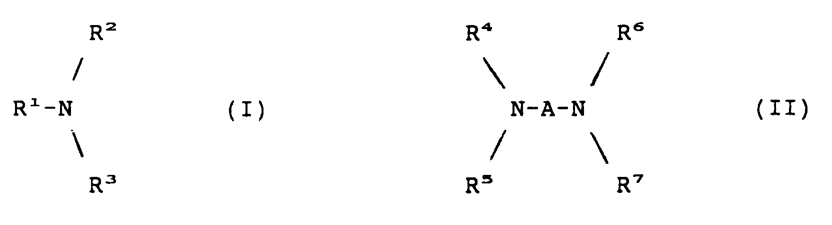 mit 2 bis 20, vorzugsweise 3 bis 10 Mol Ethylen- oder Propylenoxid und 0,6 bis 1,5, vorzugsweise 1 Mol Borsäure, Borsäureester oder Salzen der Borsäure, jeweils pro Mol Stickstoffäquivalent, wobei R¹ C₈-C₂₂-Alkyl oder C₈-C₂₂-Alkenyl bedeutet oder wenn R² und R³ Gruppen der Formel -(C₂H₄O)ₓH oder -(C₃H₆O)-ₓH darstellen, R¹ auch C₁-C₂₂-Alkyl bedeuten kann, R² Wasserstoff, C₁-C₂₂-Alkyl oder eine Gruppe der Formeln -(C₂H₄O)ₓH, -(C₃H₆O)ₓH oder -CH₂CH₂CH₂NH₂ bedeutet, R³ Wasserstoff, eine Octylgruppe oder eine Gruppe der Formeln -(C₂H₄O)ₓH, -(C₃H₆O)ₓH oder -CH₂CH₂CH₂NH₂ bedeutet, R⁴ und R⁶ C₁-C₄-Alkyl oder eine Gruppe der Formel -(C₂H₄O)ₓH oder -(C₂H₆O)ₓH bedeuten, R⁵ und R⁷ eine Gruppe der Formel -(C₂H₄O)ₓH oder -(C₃H₆O)ₓH, A eine Gruppe der Formeln -(CH₂)ₙ, -(CH₂CH₂OCH₂CH₂)ₙ oder -(CH₂CH₂NHCH₂CH₂)ₙ, x Zahlen von 1 bis 55 und n eine Zahl von 1 bis 20 bedeuten, sowie 0-5 Gew.-% Alkali und 0-50 Gew.-% eines anorganischen fungiziden und/oder insektiziden Wirkstoffs oder Wirkstoffgemisches sowie evtl. geringe Mengen Hilfsmittel und Wasser, wobei die Summe jeweils 100 Gew.-% ergibt.

2. Mittel nach Anspruch 1, **dadurch gekennzeichnet**, daß es ein Konzentrat ist, das vor Gebrauch mit Wasser auf eine Konzentration von 1 bis 20 % verdünnt wird.

3. Mittel nach Anspruch 1, **dadurch gekennzeichnet**, daß es als anorganischen fungiziden und/oder insektiziden Wirkstoff Borsäure oder ein oder mehrere wasserlösliche Borsalze enthält.

4. Mittel nach den Ansprüchen 1 bis 3, **dadurch gekennzeichnet**, daß es gegen Termiten wirksam ist.

## Claims

1. A chromium-free wood preservative based on copper salts and alkanolamine, consisting of from 5 to 50% by weight of copper salt, from 5 to 50% by weight of alkanolamine, from 2 to 50% by weight of quaternary ammonium borate which is obtained by the simultaneous reaction of amines of the general formula I or II: 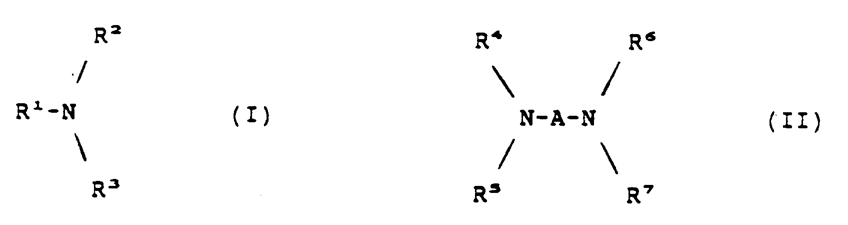 having from 2 to 20, preferably 3 to 10, Mol of ethylene or propylene oxide and from 0·6 to 1·5, preferably 1, Mol of boric acid, boric acid esters or salts of boric acid, in each case *per* Mol of nitrogen equivalent, in which **R¹** represents a C₈ to C₂₂ alkyl or a C₈ to C₂₂ alkenyl or, if **R²** and **R³** represent groups of the formula - (C₂H₄O)ₓH or -(C₃H₆O)ₓH, **R¹** can also represent a C₁ to C₂₂ alkyl, **R²** represents hydrogen, a C₁ to C₂₂ alkyl or a group of the formula -(C₂H₄O)ₓH, -(C₃H₆O)ₓH or -CH₂CH₂CH₂NH₂, **R³** represents hydrogen, an octyl group or a group of the formula -(C₂H₄O)ₓH, -(C₃H₆O)ₓH or -CH₂CH₂CH₂NH₂, **R⁴** and **R⁶** represent a C₁ to C₄ alkyl or a group of the formula -(C₂H₄O)ₓH or -(C₂H₆O)ₓH, **R⁵** and **R⁷** [represent] a group of the formula -(C₂H₄O)ₓH or -(C₃H₆O)ₓH, A [represents] a group of the formula -(CH₂)ₙ, -(CH₂CH₂OCH₂CH₂)ₙ or -(CH₂CH₂NHCH₂CH₂)ₙ, **x** represents numbers from 1 to 55, and **n** a whole number from 1 to 20, and from 0 to 5% by weight of an alkali and from 0 to 50% by weight of an inorganic fungicidal and/or insecticidal active substance or mixture of active substances and, optionally, small quantities or auxiliary agents and water, in which the sum comes to 100% by weight in each case.

2. An agent according to Claim 1, **characterized in that** it is a concentrate which is diluted with water to a concentration of from 1 to 20% before use.

3. An agent according to Claim 1, **characterized in that** it contains boric acid or one or more water-soluble boron salts as an inorganic fungicidal and/or insecticidal active substance.

4. An agent according to Claims 1 to 3, **characterized in that** it is effective against termites.

## Revendications

1. Agent de protection du bois sans chrome à base de sels de cuivre et d'alcanolamine, constitué de 5-50% en poids de sels de cuivre, de 5-50% en poids d'alcanolamine, de 2-50% en poids de borate d'ammonium quaternaire, qui est obtenu par réaction simultanée d'amines de formule générale I ou II 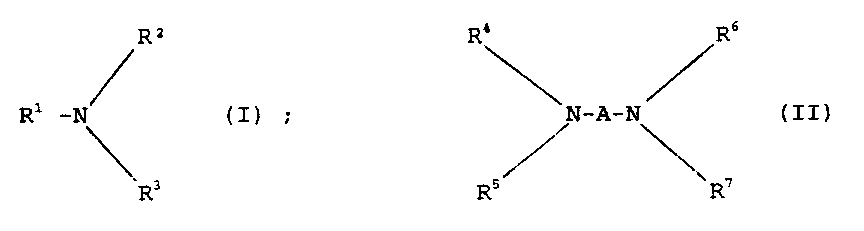 avec 2 jusqu'à 20, de préférence 3 jusqu'à 10 moles d'oxyde d'éthylène ou de propylène et 0,6 jusqu'à 1,5, de préférence 1 mole d'acide borique, d'esters de l'acide borique ou de sels de l'acide borique, respectivement par mole d'équivalent d'azote, où R¹ signifie un alkyle en C₈-C₂₂ ou un alcényle en C₈-C₂₂ ou, lorsque R² et R³ représentent des groupes de la formule -(C₂H₄O)ₓH ou -(C₃H₆O)ₓH, R¹ peut également signifier un alkyle en C₁-C₄, R² signifie l'hydrogène, un alkyle en C₁-C₂₂ ou un groupe de formule -(C₂H₄O)ₓH, -(C₃H₆O)ₓH ou CH₂CH₂CH₂NH₂, R³ signifie l'hydrogène, un groupe octyle ou un groupe de formule -(C₂H₄O)ₓH, -(C₃H₆O)ₓH ou CH₂CH₂CH₂NH₂, R⁴ et R⁶ signifient un alkyle en C₁-C₄ ou un groupe de la formule -(C₂H₄O)ₓH ou -(C₃H₆O)ₓH, R⁵et R⁷ signifient un groupe de formule -(C₂H₄O)ₓH ou -(C₃H₆O)ₓH, A un groupe de formule -(CH₂)ₙ-, -(CH₂CH₂OCH₂CH)ₙ ou -(CH₂CH₂NHCH₂CH₂)ₙ, x signifie des nombres de 1 à 55 et n un nombre entier de 1 à 20, ainsi que de 0-5% en poids d'alcali et de 0-50% en poids d'une substance active ou mélange de substances actives fongicide et/ou insecticide inorganique ainsi qu'éventuellement de faibles quantités d'adjuvants et d'eau, la somme s'établissant chaque fois à 100% en poids.

2. Agent selon la revendication 1, caractérisé en ce qu'il est un concentré qui est dilué, avant emploi, avec de l'eau jusqu'à une concentration de 1 à 20%.

3. Agent selon la revendication 1, caractérisé en ce qu'il contient, en tant que substance active fongicide et/ou insecticide inorganique, de l'acide borique ou un ou plusieurs sels de bore hydrosolubles.

4. Agent selon les revendications 1 à 3, caractérisé en ce qu'il est efficace contre les termites.
